# EUROPÄISCHE PATENTSCHRIFT

(11) **EP 3 017 432 B1**
(45) Veröffentlichungstag und Bekanntmachung des Hinweises auf die Patenterteilung: **16.12.2020**
(21) Anmeldenummer: 14735924.4
(22) Anmeldetag: 01.07.2014
(51) Int. Cl.: G07C 5/00, H04L 9/32, H04L 9/08

(54) **GESICHERTE KOMMUNIKATIONSEINRICHTUNG FÜR EIN FAHRZEUG UND FAHRZEUGSYSTEM**
SECURED COMMUNICATION DEVICE FOR A VEHICLE AND VEHICLE SYSTEM
DISPOSITIF DE COMMUNICATION SÉCURISÉ POUR UN VÉHICULE ET SYSTÈME DE VÉHICULE

(30) Priorität: 04.07.2013 DE 102013213177
(43) Veröffentlichungstag der Anmeldung: 11.05.2016
(73) Patentinhaber: Continental Automotive GmbH, 30165 Hannover (DE)
(72) Erfinder: ROMBACH, Gerhard, 78098 Triberg (DE); LANGE, Roland, 78086 Brigachtal (DE); CHAKAM, Guy-Aymar, 93342 Saal an der Donau (DE)
(86) Internationale Anmeldenummer: PCT/EP2014/063991
(87) Internationale Veröffentlichungsnummer: WO 2015/000918

(56) Entgegenhaltungen:
- WO-A1-2004/066219
- WO-A1-2009/043794
- WO-A2-2013/003662
- DE-A1-102008 048 162
- DE-U1-202005 021 985

## Beschreibung

Die Erfindung betrifft ein Fahrzeugsystem.

Ein Funktionsumfang von Bordinformationssystemen, insbesondere Tachographen, Mauterfassungsgeräte oder sogenannte Universal Onboard Units, die die Funktionen von Tachographen und Mauterfassungsgeräten kombinieren, wird zunehmend erweitert. Insbesondere die Möglichkeiten, die Position eines Fahrzeugs, beispielsweise eines Lastkraftwagens, durch ein Geopositionssystem zu verfolgen, bietet eine Vielzahl von neuen Anwendungsmöglichkeiten, beispielsweise zur Mauterfassung, Navigation oder Überwachung sicherheitskritischer Güter während eines Transports. In diesem Zusammenhang müssen die Bordinformationssysteme hohe technische Anforderungen, insbesondere in Bezug auf Datenschutz und Datensicherheit erfüllen.

Aus DE 10 2008 048 162 A1 ist ein System, das eine als Tachograph ausgebildete On-Board-Unit umfasst und das ferner eine Positionsermittlungseinrichtung und/oder eine Funkkommunikationseinrichtung umfasst, bekannt. Die On-Board-Unit ist ausgebildet, eine Datenspeicherung kryptographisch durch Signieren und/oder Verschlüsseln zu sichern.

Aus DE 20 2005 021 985 U1 ist ein System zur Verarbeitung von positionsbezogenen Daten bekannt. Das System umfasst eine Vielzahl von mobilen On-Board-Units, wobei jeweils eine On-Board-Unit an zum Beispiel einem Fahrzeug angeordnet ist und dazu bestimmt ist, positionsbezogene Daten des Fahrzeugs zu erfassen, sowie ein zentrales und stationäres Back-Office, das zur Verarbeitung der von den On-Board-Units übertragenen positionsbezogenen Daten bestimmt ist und das eine Positionsberechnungsinstanz umfasst.

Die Aufgabe, die der Erfindung zu Grunde liegt, ist es, ein Fahrzeugsystem zu schaffen, das einen sicheren Betrieb zumindest einer sicherheitskritischen Steuereinrichtung des Fahrzeugs ermöglicht.

Die Aufgabe wird gelöst durch die Merkmale des unabhängigen Patentanspruchs 1. Vorteilhafte Weiterbildungen der Erfindung sind in den Unteransprüchen gekennzeichnet.

Die Erfindung zeichnet sich aus durch ein Fahrzeugsystem, das eine sicherheitskritische Steuereinrichtung und eine sichere Kommunikationseinrichtung aufweist.

Das Fahrzeugsystem umfasst einen Fahrzeugbus, der die Fahrzeugschnittstelle der sicheren Kommunikationseinrichtung jeweils mit einer vorgegebenen Schnittstelle der sicherheitskritischen Steuereinrichtung signaltechnisch koppelt.

Die Erfindung zeichnet sich aus durch eine gesicherte Kommunikationseinrichtung für ein Fahrzeug. Die gesicherte Kommunikationseinrichtung weist ein Gehäuse mit einer Gehäusesicherung auf. Ferner umfasst die gesicherte Kommunikationseinrichtung eine in dem Gehäuse angeordnete vorgegebene Funkschnittstelle und zumindest ein zu der Funkschnittstelle zugehöriges Antennenelement zur signaltechnischen Kopplung der gesicherten Kommunikationseinrichtung mit zumindest einer vorgegebenen weiteren Einrichtung. Hierbei ist das zumindest eine Antennenelement ausgebildet zum Senden und/oder Empfangen von Signalwellen eines vorgegebenen Frequenzbandes. Das Antennenelement ist zumindest teilweise in dem gesicherten Gehäuse angeordnet. Des Weiteren weist die gesicherte Kommunikationseinrichtung eine in dem Gehäuse angeordnete vorgegebene Fahrzeugschnittstelle auf zur signaltechnischen Kopplung der gesicherten Kommunikationseinrichtung mit zumindest einer sicherheitskritischen Steuereinrichtung des Fahrzeugs. Die gesicherte Kommunikationseinrichtung weist eine in dem Gehäuse angeordnete kryptographische Funktionseinheit auf, die zumindest einen kryptographischen Schlüssel aufweist und/oder ausgebildet ist, zumindest eine kryptographische Funktion auszuführen. Die gesicherte Kommunikationseinrichtung ist ausgebildet, mittels der kryptographischen Funktionseinheit Daten, die die gesicherte Kommunikationseinrichtung über die Funkschnittstelle und/oder über die Fahrzeugschnittstelle empfängt, kryptographisch auszuwerten und/oder sicher zu speichern und/oder sicher über die Funkschnittstelle und/oder sicher über die Fahrzeugschnittstelle weiterzuleiten an die eine oder an eine weitere sicherheitskritische Steuereinrichtung beziehungsweise an die eine oder an eine zweite weitere Einrichtung.

Vorteilhafterweise kann die gesicherte Kommunikationseinrichtung als zentrale Fahrzeugeinrichtung genutzt werden, die eine sichere Bereitstellung von Daten für mehrere sicherheitskritische Steuereinrichtungen ermöglicht und damit einen sicheren Betrieb der sicherheitskritischen Steuereinrichtungen ermöglicht. Im Vergleich zu spezifischen gesicherten Kommunikationslösungen für die jeweilige sicherheitskritische Steuereinrichtung können so Bauraum und/oder Herstellkosten für das Fahrzeug eingespart werden. Ferner kann eine Erweiterung eines Funktionsumfangs des Fahrzeugs durch weitere sicherheitskritische Funktionen und/oder sicherheitskritische Steuereinrichtungen einfacher erfolgen.

Die kryptographische Funktionseinheit ermöglicht zum einen einen verbesserten Zugriffsschutz auf das Fahrzeug zur Vermeidung von Manipulationen in den gesicherten Steuereinrichtungen. Zum anderen ermöglicht die kryptographische Funktionseinheit einen verbesserten Zugriffsschutz innerhalb des Fahrzeugs zur Vermeidung einer unzulässigen Kommunikation mit den weiteren Einrichtungen.

Die jeweilige weitere Einrichtung kann hierbei eine fahrzeugexterne Einrichtung sein oder aber auch eine Fahrzeugeinrichtung, die am oder im Fahrzeug angeordnet ist, beispielsweise ein Sensorelement, das eine Funkschnittstelle aufweist. Dies hat den Vorteil, dass keine zusätzlichen Leitungen im Fahrzeug für die weitere Einrichtung angeordnet werden müssen.

Vorteilhafterweise ermöglicht der Schlüssel und/oder die zumindest eine kryptographische Funktion einen authentisierten Zugriff auf Funkverbindungen vom Fahrzeug nach außen und von außen in das Fahrzeug. Eine Zuverlässigkeit, insbesondere eine Datensicherheit und/oder ein Datenschutz und/oder Manipulationssicherheit der sicherheitskritischen Steuereinrichtung kann somit erhöht werden. Möglichkeiten der Fahrzeugmanipulationen können begrenzt werden. Der Schlüssel und/oder die zumindest eine kryptographische Funktion ermöglichen, den Zugriffschutz je nach Anwendung unterschiedlich restriktiv auszubilden.

Der kryptographische Schlüssel kann auch als Geheimnis bezeichnet werden und somit auch ein Passwort und/oder eine Passphrase und/oder eine große Zahl und/oder eine Reihe zufällig erzeugter Bytes umfassen.

Die gesicherte Kommunikationseinrichtung kann als ein sogenannter Geber angesehen werden für Daten von Geschwindigkeit-Weg-Koordinaten-Zeit-Abhängigkeiten, wie sie für Tachographen und/oder Mauerfassungsgeräte bei Lastkraftwagen genutzt werden.

Die Gehäusesicherung ermöglicht vorteilhafterweise, ein unberechtigtes Öffnen des Gehäuses zu verhindern und/oder die Öffnung des Gehäuses zu dokumentieren.

In einer vorteilhaften Ausgestaltung gemäß dem ersten Aspekt umfasst die Gehäusesicherung einen Gehäuseschalter und/oder eine Gehäusekodierung. Der Gehäuseschalter und/oder die Gehäusekodierung können vorteilhafterweise genutzt werden, zu erkennen, ob und/oder wann das Gehäuse der gesicherten Kommunikationseinrichtung geöffnet wurde. Die Gehäusesicherung ist insbesondere derart ausgebildet, dass das Gehäuse nur in Verbindung mit einem vorgegebenen Berechtigungsmittel geöffnet werden kann.

In einer weiteren vorteilhaften Ausgestaltung gemäß dem ersten Aspekt umfasst die zumindest eine sicherheitskritische Steuereinrichtung ein Bordinformationssystem und/oder einen digitalen Tachographen und/oder eine Mauterfassungseinrichtung und/oder eine Universal Onboard Unit. Dies hat den Vorteil, dass für das Bordinformationssystem und/oder den digitalen Tachographen und/oder die Mauterfassungseinrichtung und/oder die Universal Onboard Unit sehr einfach zusätzliche Daten und/oder alternative Daten sicher zur Verfügung gestellt werden können und somit ein Funktionsumfang dieser Einrichtungen einfach erweitert werden kann und/oder eine Funktionsausführung vereinfacht werden kann.

In einer weiteren vorteilhaften Ausgestaltung gemäß dem ersten Aspekt umfasst die kryptographische Funktionseinheit eine Chipkarte. Dies ermöglicht eine kostengünstige Herstellung der gesicherten Kommunikationseinrichtung. Vorzugsweise weist die gesicherte Kommunikationseinrichtung ein Chipkarten-Lesegerät auf, in das die Chipkarte einsteckt werden kann und aus dem die Chipkarte ausziehbar ist. Dies hat den Vorteil, dass die Chipkarte einfach ersetzt werden kann durch eine neue Chipkarte mit einem erweiterten Funktionsumfang.

In einer weiteren vorteilhaften Ausgestaltung gemäß dem ersten Aspekt ist die kryptographische Funktionseinheit passiv ausgebildet. Dies bedeutet, dass die kryptographische Funktionseinheit selber keine Energieversorgung aufweist. Dies hat den Vorteil, dass die kryptographische Funktionseinheit kostengünstig hergestellt werden kann und wenig Bauraum in Anspruch nimmt.

In einer weiteren vorteilhaften Ausgestaltung gemäß dem ersten Aspekt weist die kryptographische Funktionseinheit einen zeitlich beschränkten kryptographischen Schlüssel auf, der nach einer vorgegebenen Zeitdauer seine Gültigkeit verliert. Vorteilhafterweise kann dies einen Beitrag leisten, eine Zuverlässigkeit und/oder Manipulationssicherheit der gesicherten Kommunikationseinrichtung zu erhöhen. Die vorgegebene Zeitdauer kann jeweils unterschiedlich sein oder gleich.

In einer weiteren vorteilhaften Ausgestaltung gemäß dem ersten Aspekt ist die gesicherte Kommunikationseinrichtung ausgebildet für eine Anordnung an einer Außenseite des Fahrzeugs. Vorteilhafterweise ermöglicht dies, dass auch Funksignale mit sehr geringer Leistung, insbesondere Satellitensignale, mit ausreichender Qualität empfangen werden können. Ferner ermöglicht es, bezogen auf eine oder mehrere gewünschte Anwendungen und/oder einer Fahrzeugausgestaltung das zumindest eine Antennenelement optimal oder zumindest näherungsweise optimal auszurichten. Spezielle Anforderungen an das Antennenelement, wie zum Beispiel direkter HF-Sichtbereich zum Orbit und/oder zum Navigationssatelliten und/oder Funkmasten, können einfacher erfüllt werden im Vergleich zu einer Anordnung, bei der das Antennenelement im Fahrzeuginnern angeordnet ist.

In einer weiteren vorteilhaften Ausgestaltung gemäß dem ersten Aspekt ist die gesicherte Kommunikationseinrichtung ausgebildet, mittels der kryptographischen Funktionseinheit abhängig von einer von der zumindest einen sicherheitskritischen Steuereinrichtung empfangenen vorgegebenen Identifikationsinformation die sicherheitskritische Steuereinrichtung zu authentisieren und Daten gesichert an die sicherheitskritische Steuereinrichtung zu senden und/oder Daten gesichert von der sicherheitskritischen Steuereinrichtung zu empfangen. Vorteilhafterweise ermöglicht dies in einem verteilten System, das die sicherheitskritischen Steuereinrichtungen und die weiteren Einrichtungen umfasst, eine direkte logische Zuordnung der jeweiligen sicherheitskritischen Steuereinrichtung zu einem gewünschten Kommunikationspartner und damit eine Bereitstellung einer sicheren Verbindung zwischen der jeweiligen sicherheitskritischen Steuereinrichtung und dem gewünschten Kommunikationspartner.

In einer weiteren vorteilhaften Ausgestaltung gemäß dem ersten Aspekt ist die gesicherte Kommunikationseinrichtung ausgebildet, mittels der kryptographischen Funktionseinheit abhängig von einer von der zumindest einen weiteren Einrichtung empfangenen vorgegebenen Identifikationsinformation die weitere Einrichtung zu authentisieren und Daten gesichert an die weitere Einrichtung zu senden und/oder Daten gesichert von der weiteren Einrichtung zu empfangen. Vorteilhafterweise ermöglicht dies in einem verteilten System, das die sicherheitskritischen Steuereinrichtungen und die weiteren Einrichtungen umfasst, eine direkte logische Zuordnung der jeweiligen weiteren Einrichtung zu einem gewünschten Kommunikationspartner im Fahrzeug und damit eine Bereitstellung einer sicheren Verbindung zwischen einer gewünschten sicherheitskritischen Steuereinrichtung und der jeweiligen weiteren Einrichtung.

In einer weiteren vorteilhaften Ausgestaltung gemäß dem ersten Aspekt ist die jeweilige Identifikationsinformation für die zumindest eine sicherheitskritische Steuereinrichtung und/oder für die zumindest eine weitere Einrichtung derart vorgegeben, dass vorgegebene Sicherheitsanforderungen der zumindest einen sicherheitskritischen Steuereinrichtung beziehungsweise der zumindest einen weiteren Einrichtung erfüllt werden. Vorteilhafterweise ermöglicht dies eine Parametrierung der jeweiligen Verschlüsselung und damit eine Bereitstellung eines Systems mit verteilten Zugriffsrechten.

In einer weiteren vorteilhaften Ausgestaltung gemäß dem ersten Aspekt sind eine jeweilige Schlüssellänge und/oder ein jeweiliger kryptographischer Funktionsalgorithmus für die zumindest eine sicherheitskritische Steuereinrichtung und/oder für die zumindest eine weitere Einrichtung derart vorgegeben, dass vorgegebene Sicherheitsanforderungen der zumindest einen sicherheitskritischen Steuereinrichtung beziehungsweise der zumindest einen weiteren Einrichtung erfüllt werden. Vorteilhafterweise ermöglicht dies eine Parametrierung der jeweiligen krytpographischen Funktionen und damit eine Bereitstellung eines Systems mit unterschiedlichem Zugriffsschutz.

Die gesicherte Kommunikationseinrichtung ist ausgebildet, über die Funkschnittstelle von verschiedenen Navigationssatellitensystemen empfangene Satellitendaten zu vergleichen, die repräsentativ sind für eine Position des Fahrzeugs und/oder für eine Geschwindigkeitsinformation des Fahrzeugs und/oder für eine Uhrzeit und/oder ein Datum.

Die gesicherte Kommunikationseinrichtung ist ausgebildet, abhängig von dem Vergleich der Satellitendaten eine Integrität der Satellitendaten zu prüfen. Dies hat den Vorteil, dass für die zumindest eine sicherheitskritische Steuereinrichtung authentisierte Satellitendaten zur Verfügung gestellt werden können und somit durch eine erhöhte Datenredundanz im Fahrzeug eine Manipulationssicherheit der sicherheitskritischen Steuereinrichtung, insbesondere eines Tachographen, verbessert werden kann.

Die gesicherte Kommunikationseinrichtung ist ausgebildet, mittels der kryptographischen Funktionseinheit den Vergleich der Satellitendaten und die Integritätsprüfung sicher auszuführen und die integritätsgeprüften Daten sicher zu speichern.

In einer weiteren vorteilhaften Ausgestaltung gemäß dem ersten Aspekt ist die gesicherte Kommunikationseinrichtung ausgebildet, mittels der kryptographischen Funktionseinheit die integritätsgeprüften Daten sicher an die zumindest eine sicherheitskritische Steuereinrichtung weiterzuleiten.

Ausführungsbeispiele der Erfindung sind im Folgenden anhand der schematischen Zeichnung erläutert.

Es zeigt:

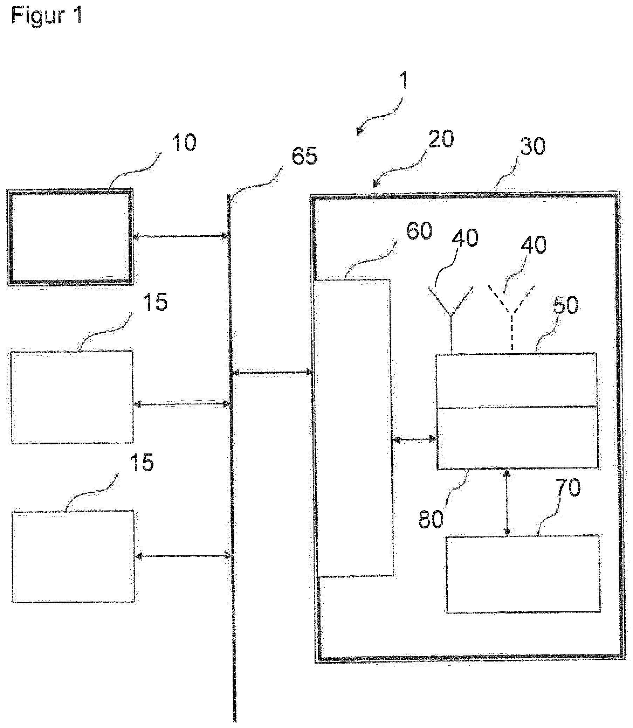

- Figur 1: ein beispielhaftes Blockschaltbild eines Fahrzeugsystems mit einer gesicherten Kommunikationseinrichtung.

Das Fahrzeugsystem 1 umfasst zumindest eine sicherheitskritische Steuereinrichtung 10 und eine sichere Kommunikationseinrichtung 20 sowie einen Fahrzeugbus 65.

Die zumindest eine sicherheitskritische Steuereinrichtung 10 und der Fahrzeugbus 65 sind vorzugsweise in einem Fahrzeug, insbesondere in einem Lastkraftwagen, angeordnet. Die gesicherte Kommunikationseinrichtung 20 ist vorzugsweise an einer Außenseite des Fahrzeugs, beispielsweise auf einer Außenseite eines Fahrzeugdachs, angeordnet.

In dem in Figur 1 gezeigten Beispiel weist das Fahrzeugsystem 1 optional auch zumindest eine nicht-sicherheitskritische Steuereinrichtung 15 auf.

Der Fahrzeugbus 65 umfasst beispielsweise eine CAN-Bus (Controller Area Network) und/oder einen Ethernet-Bus. Der Fahrzeugbus 65 ist beispielsweise derart ausgebildet, dass eine Echtzeitverbindung zwischen mit dem Fahrzeugbus gekoppelten Komponenten in Echtzeit möglich ist.

Die zumindest eine sicherheitskritische Steuereinrichtung 10 umfasst beispielsweise ein Bordinformationssystem, zum Beispiel ein digitalen Tachographen oder eine Mauterfassungseinrichtung oder eine Universal Onboard Unit.

Die zumindest eine sicherheitskritische Steuereinrichtung 10 weist eine vorgegebene Schnittstelle auf. Die vorgegebene Schnittstelle ist signaltechnisch koppelbar mit dem Fahrzeugbus 65 und umfasst beispielsweise eine CAN-Bus-Schnittstelle und/oder eine Ethernet-Schnittstelle.

Die gesicherte Kommunikationseinrichtung 20 weist eine vorgegebene Funkschnittstelle 50, eine vorgegebene Fahrzeugschnittstelle 60 und eine kryptographische Funktionseinheit 70 auf, die in einem Gehäuse 30 der gesicherten Kommunikationseinrichtung 20 angeordnet sind. Das Gehäuse 30 umfasst eine Gehäusesicherung. Die Gehäusesicherung umfasst beispielsweise ein Gehäuseschloss und/oder einen Gehäuseschalter und/oder eine Gehäusekodierung.

Die Funkschnittstelle 50 ist ausgebildet, die gesicherte Kommunikationseinrichtung 20 signaltechnisch zu koppeln mit zumindest einer vorgegebenen weiteren Einrichtung.

Die Funkschnittstelle 50 umfasst beispielsweise ein Sende- und Empfangsmodul für Mobilfunkverbindungen, zum Beispiel für GSM (Global System for Mobile Communications) und/oder LTE (Long Term Evolution) und/oder UMTS (Universal Mobile Telecommunications System) und so weiter. Alternativ oder zusätzlich umfasst die Funkschnittstelle 50 beispielsweise ein Sende- und Empfangsmodul für kurze Funkverbindungen, zum Beispiel für WLAN (Wireless Local Area Network) und/oder Bluetooth und/oder DSRC (Dedicated Short Range Communication). Alternativ oder zusätzlich umfasst die Funkschnittstelle 50 ein Sende- und Empfangsmodul für Funkverbindungen zu einem oder mehreren globalen Navigationssatellitensystemen (GNSS), zum Beispiel ein GPS-Modul und/oder Galileo-Modul.

Die gesicherte Kommunikationseinrichtung 20 umfasst zumindest ein zu der Funkschnittstelle 50 zugehöriges Antennenelement 40. Das zumindest eine Antennenelement 40 ist beispielsweise breitbandig ausgebildet, so dass es für verschiedene Mobilfunkstandards und/oder weitere Funkstandards genutzt werden kann. Je nach Anwendung können jedoch auch mehrere Antennenelemente 40 genutzt werden. Das Antennenelement 40 umfasst ein Stahlelement zur Abstrahlung und/oder zum Empfang von elektromagnetischen Wellen. Das Antennenelement 40 umfasst beispielsweise ferner einen Verstärker. Das zumindest eine Antennenelement 40 ist zumindest teilweise in dem gesicherten Gehäuse 30 angeordnet, um eine Manipulation der empfangenen und der zu sendenden Daten weitestgehend zu vermeiden.

Die Fahrzeugschnittstelle 60 ist ausgebildet, die gesicherte Kommunikationseinrichtung 20 signaltechnisch zu koppeln mit zumindest der einen sicherheitskritischen Steuereinrichtung 10 des Fahrzeugs. Die Fahrzeugschnittstelle 60 umfasst beispielsweise eine CAN-Bus-Schnittstelle und/oder eine Ethernetbus-Schnittstelle. Dies ermöglicht, dass die gesicherte Kommunikationseinrichtung 20 über den Fahrzeugbus 65 mit sämtlichen sicherheitskritischen Steuereinrichtungen 10 kommunizieren kann und optional auch mit den nicht-sicherheitskritischen Steuereinrichtungen 15.

Die gesicherte Kommunikationseinrichtung 20 weist eine kryptographische Funktionseinheit 70 auf, die zumindest einen kryptographischen Schlüssel aufweist und/oder ausgebildet ist, zumindest eine kryptographische Funktion auszuführen.

Die kryptographische Funktionseinheit 70 weist beispielsweise einen zeitlich beschränkten kryptographischen Schlüssel auf, der nach einer vorgegebenen Zeitdauer seine Gültigkeit verliert. Der kryptographische Schlüssel wird dann spätestens nach der vorgegebenen Zeitdauer, beispielsweise zyklisch, erneuert. Die zeitliche Gültigkeit kann hierbei systeminhärent bekannt und abfragbar sein.

Die kryptographische Funktionseinheit 70 ist ausgebildet, kryptographische Funktionen, wie zum Beispiel zumindest einen Schlüsselaustauschalgorithmus und/oder zumindest eine Signaturfunktion und/oder zumindest einen Verschlüsselungsalgorithmus auszuführen. Alternativ oder zusätzlich ist die kryptographische Funktionseinheit 70 beispielsweise ausgebildet zum sicheren Transport und zur Lagerung von kryptographischen Schlüsseln.

Die kryptographische Funktionseinheit 70 umfasst beispielsweise ein Secure Access Module (SAM).

Die gesicherte Kommunikationseinrichtung 20 ist ausgebildet, mittels der kryptographischen Funktionseinheit 70 Daten, die die gesicherte Kommunikationseinrichtung 20 über die Funkschnittstelle 50 und/oder über die Fahrzeugschnittstelle 60 empfängt, kryptographisch auszuwerten und/oder sicher zu speichern und/oder sicher über die Funkschnittstelle 50 und/oder sicher über die Fahrzeugschnittstelle 60 weiterzuleiten an die eine oder an eine weitere sicherheitskritische Steuereinrichtung 10 beziehungsweise an die eine oder an eine zweite weitere Einrichtung.

Die gesicherte Kommunikationseinrichtung 20 weist hierzu beispielsweise eine Recheneinheit 80 auf, zum Beispiel einen Microcontroller.

Die kryptographische Funktionseinheit 70 ist beispielsweise lösbar in der gesicherten Kommunikationseinrichtung 20 angeordnet. Alternativ kann die kryptographische Funktionseinheit 70 fest in der gesicherten Kommunikationseinrichtung 20 angeordnet sein.

Die kryptographische Funktionseinheit 70 umfasst beispielsweise eine Chipkarte. Vorzugsweise weist die gesicherte Kommunikationseinrichtung 20 in diesem Fall ein Chipkarten-Lesegerät auf, in das die Chipkarte einsteckt werden kann und aus dem die Chipkarte ausziehbar ist.

Die kryptographische Funktionseinheit 70 ist beispielsweise passiv ausgebildet. Alternativ kann die kryptographische Funktionseinheit 70 aktiv ausgebildet sein.

Die kryptographische Funktionseinheit 70 ist beispielsweise ausgebildet, eine sichere Verbindung zur Datenübertragung zwischen sich und der jeweiligen sicherheitskritischen Steuereinrichtung 10 und/oder der weiteren Einrichtung aufzubauen. Im Englischen wird dieser Prozess auch "Secure Pairing" genannt. Hierbei erfolgt jeweils eine gegenseitige Authentisierung mittels vorgegebenem Sicherheitsschlüssel. Der sichere Verbindungsaufbau umfasst hierbei beispielsweise auch eine Aktivierungssteuerung.

Die gesicherte Kommunikationseinrichtung 20 ist ferner ausgebildet, über die Funkschnittstelle 50 von verschiedenen Navigationssatellitensystemen empfangene Satellitendaten zu vergleichen und abhängig von dem Vergleich der Satellitendaten eine Integrität der Satellitendaten zu prüfen. Die Satellitendaten sind hierbei jeweils repräsentativ für eine Position des Fahrzeugs und/oder für eine Geschwindigkeitsinformation des Fahrzeugs und/oder für eine Uhrzeit und/oder ein Datum.

Die gesicherte Kommunikationseinrichtung 20 nutzt hierzu beispielsweise die Recheneinheit 80.

Die gesicherte Kommunikationseinrichtung 20 ist ausgebildet, mittels der kryptographischen Funktionseinheit 70 den Vergleich der Satellitendaten und die Integritätsprüfung sicher auszuführen und die integritätsgeprüften Daten sicher zu speichern.

## Patentansprüche

1. Fahrzeugsystem (1) aufweisend:
- eine sicherheitskritische Steuereinrichtung (10),
- eine sichere Kommunikationseinrichtung (20) mit einer vorgegebenen Fahrzeugschnittstelle (60), die ausgebildet ist, die gesicherte Kommunikationseinrichtung (20) signaltechnisch zu koppeln mit der sicherheitskritischen Steuereinrichtung (10),
- einen Fahrzeugbus (65), der die Fahrzeugschnittstelle (60) der sicheren Kommunikationseinrichtung (20) mit einer vorgegebenen Schnittstelle der sicherheitskritischen Steuereinrichtung (10) signaltechnisch koppelt,
wobei die sichere Kommunikationseinrichtung (20) eine gesicherte Kommunikationseinrichtung (20) für ein Fahrzeug ist,
- die ein Gehäuse (30) mit einer Gehäusesicherung aufweist,
- die eine in dem Gehäuse (30) angeordnete vorgegebene Funkschnittstelle (50) und zumindest ein zugehöriges Antennenelement (40) aufweist zur signaltechnischen Kopplung der gesicherten Kommunikationseinrichtung (20) mit zumindest einer vorgegebenen weiteren Einrichtung, wobei das zumindest eine Antennenelement (40) ausgebildet ist zum Senden und/oder Empfangen von Signalwellen eines vorgegebenen Frequenzbandes und zumindest teilweise in dem gesicherten Gehäuse (30) angeordnet ist,
- die die in dem Gehäuse (30) angeordnete vorgegebene Fahrzeugschnittstelle (60) aufweist zur signaltechnischen Kopplung der gesicherten Kommunikationseinrichtung (20) mit zumindest einer sicherheitskritischen Steuereinrichtung (10) des Fahrzeugs,
- die eine in dem Gehäuse (30) angeordnete kryptographische Funktionseinheit (70) aufweist, die zumindest einen kryptographischen Schlüssel aufweist und/oder ausgebildet ist, zumindest eine kryptographische Funktion auszuführen,
- und die ausgebildet ist, mittels der kryptographischen Funktionseinheit (70) Daten, die die gesicherte Kommunikationseinrichtung (20) über die Funkschnittstelle (50) und/oder über die Fahrzeugschnittstelle (60) empfängt, kryptographisch auszuwerten und/oder sicher zu speichern und/oder sicher über die Funkschnittstelle (50) und/oder sicher über die Fahrzeugschnittstelle (60) weiterzuleiten an die eine oder an eine weitere sicherheitskritische Steuereinrichtung (10) beziehungsweise an die eine oder an eine zweite weitere Einrichtung,
und wobei das Fahrzeugsystem **dadurch gekennzeichnet ist, dass**
- die gesicherte Kommunikationseinrichtung (20) ferner dazu ausgebildet ist, über die Funkschnittstelle (50) von verschiedenen Navigationssatellitensystemen empfangene Satellitendaten zu vergleichen, die repräsentativ sind für eine Position des Fahrzeugs und/oder für eine Geschwindigkeitsinformation des Fahrzeugs und/oder für eine Uhrzeit und/oder ein Datum,
- die gesicherte Kommunikationseinrichtung (20) ferner dazu ausgebildet ist, abhängig von dem Vergleich der Satellitendaten eine Integrität der Satellitendaten zu prüfen, so dass für die sicherheitskritische Steuereinrichtung (10) authentisierte Satellitendaten zur Verfügung gestellt werden können und somit durch eine erhöhte Datenredundanz eine Manipulationssicherheit der sicherheitskritischen Steuereinrichtung (10) verbessert werden kann, und
- die gesicherte Kommunikationseinrichtung (20) ferner dazu ausgebildet ist, mittels der kryptographischen Funktionseinheit (70) den Vergleich der Satellitendaten und die Integritätsprüfung sicher auszuführen und die integritätsgeprüften Daten sicher zu speichern.

2. Fahrzeugsystem (1) nach Anspruch 1, wobei die Gehäusesicherung einen Gehäuseschalter und/oder eine Gehäusekodierung umfasst.

3. Fahrzeugsystem (1) nach Anspruch 1 oder 2,
wobei die zumindest eine sicherheitskritische Steuereinrichtung (10) ein Bordinformationssystem und/oder einen digitalen Tachographen und/oder eine Mauterfassungseinrichtung und/oder eine Universal Onboard Unit umfasst.

4. Fahrzeugsystem (1) nach einem der vorstehenden Ansprüche, wobei die kryptographische Funktionseinheit (70) eine Chipkarte umfasst.

5. Fahrzeugsystem (1) nach einem der vorstehenden Ansprüche, wobei die kryptographische Funktionseinheit (70) passiv ausgebildet ist.

6. Fahrzeugsystem (1) nach einem der vorstehenden Ansprüche, wobei die kryptographische Funktionseinheit (70) einen zeitlich beschränkten kryptographischen Schlüssel aufweist, der nach einer vorgegebenen Zeitdauer seine Gültigkeit verliert.

7. Fahrzeugsystem (1) nach einem der vorstehenden Ansprüche, wobei die gesicherte Kommunikationseinrichtung (20) ausgebildet ist für eine Anordnung an einer Außenseite des Fahrzeugs.

8. Fahrzeugsystem (1) nach einem der vorstehenden Ansprüche, wobei die gesicherte Kommunikationseinrichtung (20) ausgebildet ist, mittels der kryptographischen Funktionseinheit (70) abhängig von einer von der zumindest einen sicherheitskritischen Steuereinrichtung (10) empfangenen vorgegebenen Identifikationsinformation die sicherheitskritische Steuereinrichtung (10) zu authentisieren und Daten gesichert an die sicherheitskritische Steuereinrichtung (10) zu senden und/oder Daten gesichert von der sicherheitskritischen Steuereinrichtung (10) zu empfangen.

9. Fahrzeugsystem (1) nach einem der vorstehenden Ansprüche, wobei die gesicherte Kommunikationseinrichtung (20) ausgebildet ist, mittels der kryptographischen Funktionseinheit (70) abhängig von einer von der zumindest einen weiteren Einrichtung empfangenen vorgegebenen Identifikationsinformation die weitere Einrichtung zu authentisieren und Daten gesichert an die weitere Einrichtung zu senden und/oder Daten gesichert von der weiteren Einrichtung zu empfangen.

10. Fahrzeugsystem (1) nach Anspruch 9, wobei die jeweilige Identifikationsinformation für die zumindest eine sicherheitskritische Steuereinrichtung (10) und/oder für die zumindest eine weitere Einrichtung derart vorgegeben ist, dass vorgegebene Sicherheitsanforderungen der zumindest einen sicherheitskritischen Steuereinrichtung (10) beziehungsweise der zumindest einen weiteren Einrichtung erfüllt werden.

11. Fahrzeugsystem (1) nach einem der vorstehenden Ansprüche, wobei eine jeweilige Schlüssellänge und/oder ein jeweiliger kryptographischer Funktionsalgorithmus für die zumindest eine sicherheitskritische Steuereinrichtung (10) und/oder für die zumindest eine weitere Einrichtung derart vorgegeben sind, dass vorgegebene Sicherheitsanforderungen der zumindest einen sicherheitskritischen Steuereinrichtung (10) beziehungsweise der zumindest einen weiteren Einrichtung erfüllt werden.

12. Fahrzeugsystem (1) nach einem der vorstehenden Ansprüche, wobei die gesicherte Kommunikationseinrichtung (20) ausgebildet ist, mittels der kryptographischen Funktionseinheit (70) die integritätsgeprüften Daten sicher an die zumindest eine sicherheitskritische Steuereinrichtung (10) weiterzuleiten.

## Claims

1. Vehicle system (1) having:
- a security-critical control device (10),
- a secure communication device (20) having a predefined vehicle interface (60) which is designed to couple the secure communication device (20) to the security-critical control device (10) using signalling technology,
- a vehicle bus (65) which couples the vehicle interface (60) of the secure communication device (20) to a predefined interface of the security-critical control device (10) using signalling technology,
wherein the secure communication device (20) is a secure communication device (20) for a vehicle,
- which has a housing (30) with a housing securing means,
- which has a predefined radio interface (50) arranged in the housing (30) and at least one associated antenna element (40) for coupling the secure communication device (20) to at least one predefined further device using signalling technology, wherein the at least one antenna element (40) is designed to transmit and/or receive signal waves of a predefined frequency band and is at least partially arranged in the secure housing (30),
- which has the predefined vehicle interface (60) arranged in the housing (30) for coupling the secure communication device (20) to at least one security-critical control device (10) of the vehicle using signalling technology,
- which has a cryptographic functional unit (70) which is arranged in the housing (30) and has at least one cryptographic key and/or is designed to execute at least one cryptographic function,
- and which is designed to cryptographically evaluate data which are received by the secure communication device (20) via the radio interface (50) and/or via the vehicle interface (60) by means of the cryptographic functional unit (70) and/or to securely store said data and/or to securely forward said data via the radio interface (50) and/or via the vehicle interface (60) to the one security-critical control device (10) or to a further security-critical control device (10) or to the one further device or to a second further device,
and wherein the vehicle system is **characterized in that**
- the secure communication device (20) is also designed to compare satellite data which are received from different navigation satellite systems via the radio interface (50) and are representative of a position of the vehicle and/or an item of speed information relating to the vehicle and/or a time and/or a date,
- the secure communication device (20) is also designed to check an integrity of the satellite data on the basis of the comparison of the satellite data, with the result that authenticated satellite data can be provided for the security-critical control device (10) and manipulation security of the security-critical control device (10) can therefore be improved as a result of increased data redundancy, and
- the secure communication device (20) is also designed to securely carry out the comparison of the satellite data and the integrity check by means of the cryptographic functional unit (70) and to securely store the data whose integrity has been checked.

2. Vehicle system (1) according to Claim 1, wherein the housing securing means comprises a housing switch and/or housing coding.

3. Vehicle system (1) according to Claim 1 or 2,
wherein the at least one security-critical control device (10) comprises an on-board information system and/or a digital tachograph and/or a toll recording device and/or a universal on-board unit.

4. Vehicle system (1) according to one of the preceding claims, wherein the cryptographic functional unit (70) comprises a chip card.

5. Vehicle system (1) according to one of the preceding claims, wherein the cryptographic functional unit (70) is passive.

6. Vehicle system (1) according to one of the preceding claims, wherein the cryptographic functional unit (70) has a time-limited cryptographic key which loses its validity after a predefined period.

7. Vehicle system (1) according to one of the preceding claims, wherein the secure communication device (20) is designed to be arranged on an outer side of the vehicle.

8. Vehicle system (1) according to one of the preceding claims, wherein the secure communication device (20) is designed to authenticate the security-critical control device (10) by means of the cryptographic functional unit (70) on the basis of a predefined item of identification information received from the at least one security-critical control device (10) and to securely transmit data to the security-critical control device (10) and/or to securely receive data from the security-critical control device (10).

9. Vehicle system (1) according to one of the preceding claims, wherein the secure communication device (20) is designed to authenticate the further device by means of the cryptographic functional unit (70) on the basis of a predefined item of identification information received from the at least one further device and to securely transmit data to the further device and/or to securely receive data from the further device.

10. Vehicle system (1) according to Claim 9, wherein the respective item of identification information is predefined for the at least one security-critical control device (10) and/or for the at least one further device in such a manner that predefined security requirements of the at least one security-critical control device (10) and/or of the at least one further device are met.

11. Vehicle system (1) according to one of the preceding claims, wherein a respective key length and/or a respective cryptographic functional algorithm is/are predefined for the at least one security-critical control device (10) and/or for the at least one further device in such a manner that predefined security requirements of the at least one security-critical control device (10) and/or of the at least one further device are met.

12. Vehicle system (1) according to one of the preceding claims, wherein the secure communication device (20) is designed to securely forward the data whose integrity has been checked to the at least one security-critical control device (10) by means of the cryptographic functional unit (70) .

## Revendications

1. Système de véhicule (1), présentant :
- un dispositif de commande essentiel à la sécurité (10),
- un dispositif de communication sécurisé (20) doté d'une interface de véhicule prédéfinie (60) qui est réalisée pour coupler le dispositif de communication sécurisé (20) avec le dispositif de commande essentiel à la sécurité (10) en termes de signal,
- un bus de véhicule (65) qui couple l'interface de véhicule (60) du dispositif de communication sécurisé (20) avec une interface prédéfinie du dispositif de commande essentiel à la sécurité (10) en termes de signal,
dans lequel le dispositif de communication sécurisé (20) est un dispositif de communication sécurisé (20) pour un véhicule
- qui présente un boîtier (30) doté d'un dispositif de protection de boîtier,
- qui présente une interface radio prédéfinie (50) disposée dans le boîtier (30) et au moins un élément d'antenne (40) associé pour le couplage en termes de signal du dispositif de communication sécurisé (20) avec au moins un dispositif prédéfini supplémentaire, ledit au moins un élément d'antenne (40) étant réalisé pour envoyer et/ou recevoir des ondes de signal d'une bande de fréquence prédéfinie et étant disposé au moins en partie dans le boîtier sécurisé (30),
- qui présente l'interface de véhicule prédéfinie (60) disposée dans le boîtier (30) pour le couplage en termes de signal du dispositif de communication sécurisé (20) avec au moins un dispositif de commande essentiel à la sécurité (10) du véhicule,
- qui présente une unité fonctionnelle cryptographique (70) disposée dans le boîtier (30) qui présente au moins une clé cryptographique et/ou est réalisée pour exécuter au moins une fonction cryptographique,
- et qui est réalisé, au moyen de l'unité fonctionnelle cryptographique (70), pour évaluer de manière cryptographique des données reçues par le dispositif de communication sécurisé (20) par l'interface radio (50) et/ou par l'interface de véhicule (60) et/ou pour les enregistrer de manière sécurisée et/ou pour les retransmettre de manière sécurisée par l'interface radio (50) et/ou par l'interface de véhicule (60) à un dispositif de commande essentiel à la sécurité (10) supplémentaire ou audit ou à un deuxième dispositif supplémentaire,
et le système de véhicule étant **caractérisé en ce que**
- le dispositif de communication sécurisé (20) est en outre réalisé pour comparer des données de satellite reçues par l'intermédiaire de l'interface radio (50) en provenance de différents systèmes de satellites de navigation, lesdites données représentant une position du véhicule et/ou une information de vitesse du véhicule et/ou une heure et/ou une date,
- le dispositif de communication sécurisé (20) est en outre réalisé pour contrôler l'intégrité des données de satellite en fonction de la comparaison des données de satellite de sorte que des données de satellite authentifiées peuvent être mises à la disposition du dispositif de commande (10) essentiel à la sécurité, et une redondance de données accrue permet donc d'améliorer une protection contre les manipulations du dispositif de commande essentiel à la sécurité (10), et
- le dispositif de communication sécurisé (20) est en outre réalisé pour effectuer de manière sécurisée au moyen de l'unité fonctionnelle cryptographique (70) la comparaison des données de satellite et le contrôle d'intégrité et pour enregistrer de manière sécurisée les données contrôlées en intégrité.

2. Système de véhicule (1) selon la revendication 1, dans lequel le dispositif de protection de boîtier comprend un interrupteur de boîtier et/ou un codage de boîtier.

3. Système de véhicule (1) selon la revendication 1 ou 2, dans lequel ledit au moins un dispositif de commande essentiel à la sécurité (10) comprend un système d'information de bord et/ou un tachygraphe numérique et/ou un dispositif de prélèvement de péage et/ou une unité embarquée universelle.

4. Système de véhicule (1) selon l'une quelconque des revendications précédentes, dans lequel l'unité fonctionnelle cryptographique (70) comprend une carte à puce.

5. Système de véhicule (1) selon l'une quelconque des revendications précédentes, dans lequel l'unité fonctionnelle cryptographique (70) est réalisée de manière passive.

6. Système de véhicule (1) selon l'une quelconque des revendications précédentes, dans lequel l'unité fonctionnelle cryptographique (70) présente une clé cryptographique limitée dans le temps dont la validité expire à l'issue d'une période prédéfinie.

7. Système de véhicule (1) selon l'une quelconque des revendications précédentes, dans lequel le dispositif de communication sécurisé (20) est réalisé pour être disposé sur une face extérieure du véhicule.

8. Système de véhicule (1) selon l'une quelconque des revendications précédentes, dans lequel le dispositif de communication sécurisé (20) est réalisé pour authentifier au moyen de l'unité fonctionnelle cryptographique (70) le dispositif de commande essentiel à la sécurité (10) en fonction d'une information d'identification prédéfinie reçue de l'au moins un dispositif de commande essentiel à la sécurité (10) et pour envoyer de manière sécurisée des données au dispositif de commande essentiel à la sécurité (10) et/ou pour recevoir de manière sécurisée des données du dispositif de commande essentiel à la sécurité (10).

9. Système de véhicule (1) selon l'une quelconque des revendications précédentes, dans lequel le dispositif de communication sécurisé (20) est réalisé pour authentifier au moyen de l'unité fonctionnelle cryptographique (70) le dispositif supplémentaire en fonction d'une information d'identification prédéfinie reçue de l'au moins un dispositif supplémentaire et pour envoyer de manière sécurisée des données au dispositif supplémentaire et/ou pour recevoir de manière sécurisée des données du dispositif supplémentaire.

10. Système de véhicule (1) selon la revendication 9, dans lequel l'information d'identification respective est prédéfinie pour ledit au moins un dispositif de commande essentiel à la sécurité (10) et/ou pour ledit au moins un dispositif supplémentaire de façon à satisfaire à des exigences de sécurité prédéfinies de l'au moins un dispositif de commande essentiel à la sécurité (10) ou de l'au moins un dispositif supplémentaire, respectivement.

11. Système de véhicule (1) selon l'une quelconque des revendications précédentes, dans lequel une longueur de clé respective et/ou un algorithme fonctionnel cryptographique respectif sont prédéfinis pour ledit au moins un dispositif de commande essentiel à la sécurité (10) et/ou pour ledit au moins un dispositif supplémentaire de façon à satisfaire à des exigences de sécurité prédéfinies de l'au moins un dispositif de commande essentiel à la sécurité (10) ou de l'au moins un dispositif supplémentaire, respectivement.

12. Système de véhicule (1) selon l'une quelconque des revendications précédentes, dans lequel le dispositif de communication sécurisé (20) est réalisé pour retransmettre de manière sécurisée au moyen de l'unité fonctionnelle cryptographique (70) les données contrôlées en intégrité audit au moins un dispositif de commande essentiel à la sécurité (10) .
